# EUROPEAN PATENT APPLICATION

(11) **EP 4 576 368 A1**
(43) Date of publication of application: **25.06.2025**
(21) Application number: 23907589.8
(22) Date of filing: 14.12.2023
(51) Int. Cl.: H01M 50/264, H01M 50/211, H01M 50/105, H01M 50/227

(54) **BATTERY PACK AND ENERGY STORAGE SYSTEM INCLUDING SAME**

(30) Priority: 19.12.2022 KR 20220178749; 05.12.2023 KR 20230174669
(71) Applicant: LG Energy Solution, Ltd., Seoul 07335 (KR)
(72) Inventor: KONG, Yu-Dam, Daejeon 34122 (KR); OK, Seung-Min, Daejeon 34122 (KR); JO, Sang-Hyun, Daejeon 34122 (KR); CHO, Young-Bum, Daejeon 34122 (KR)
(74) Representative: Plasseraud IP
(86) International application number: PCT/KR2023/020654
(87) International publication number: WO 2024/136303

(57) **Abstract**

A battery pack according to the present disclosure may include: a plurality of battery cells; an outer case configured to store the plurality of battery cells and including a plurality of unit parts disposed to extend in the width direction of the plurality of battery cells; and a reinforcement member configured to interconnect the plurality of unit parts and to be inserted into the unit part such that the surface thereof does not contact the battery cell.

## Description

### TECHNICAL FIELD

The present disclosure relates to a battery pack and an energy storage system including the same, and more specifically, it relates to a battery pack with improved electric insulation and structural safety, and an energy storage system including the same.

The present application claims priority to Korean Patent Application No. 10-2022-0178749 filed on December 19, 2022 and Korean Patent Application No. 10-2023-0174669 filed on December 05, 2023 in the Republic of Korea, the disclosures of which are incorporated herein by reference.

### BACKGROUND ART

These days in line with a rapid increase in demand for portable electronic products such as smartphones, smart pads, and wearable devices and the commercialization of robots, electric vehicles, and the like, active research on high-performance secondary batteries capable of being repeatedly charged and discharged is underway.

Currently commercialized secondary batteries include nickel-cadmium batteries, nickel-hydrogen batteries, nickel-zinc batteries, lithium secondary batteries, and the like. Lithium secondary batteries are in the spotlight for their advantages of free charging and discharging due to almost no memory effect, a very low self-discharge rate, and a high energy density, compared to nickel-based secondary batteries.

The secondary battery may be used alone, but in many cases, multiple secondary batteries are electrically connected to each other in series and/or parallel and used. In particular, multiple secondary batteries may be stored inside one module case while being electrically connected to each other, thereby configuring one battery module. In addition, the battery module may be used alone or two or more of them may be electrically connected to each other in series and/or parallel to configure a higher level device such as a battery pack or the like. Here, the battery module and the battery pack may be used interchangeably.

As issues such as power shortage or eco-friendly energy come to the fore these days, an energy storage system (ESS) for storing generated power is receiving a lot of attention. Typically, using this energy storage system, it is easy to build a power management system such as a smart grid system, which makes it possible to easily control power supply and demand in a specific region or city. In addition, as the commercialization of electric vehicles becomes more widespread, this energy storage system may also be applied to electric charging stations capable of charging electric vehicles. In addition, the commercialization of electric vehicles and increasing interest in the same are accelerating technology development for battery packs used in the electric vehicles.

The battery pack used in the energy storage systems or electric vehicles above may be configured by storing a plurality of battery cells in an outer case that may correspond to a pack case. Here, the outer case of the battery pack may be made of a highly rigid metal material, such as steel, to support the heavy load of multiple battery cells.

However, this causes a problem with electric insulation between the outer case and the electric components, especially between the outer case and the battery cell, so in order to solve this problem, it is necessary to apply additional insulation structures or separate insulation components between the outer case and the battery cell. Accordingly, there is a problem in which manufacturing steps, tact time, and production cost of the battery pack are increased.

Therefore, there is a need to develop technology for an outer case structure with improved structural rigidity and safety to firmly support multiple battery cells while securing electric insulation between the outer case and electric components.

### DISCLOSURE

### Technical Problem

The present disclosure has been designed to solve the problems of the related art, and therefore the present disclosure is directed to providing a battery pack with ensured electric insulation and structural safety, and an energy storage system including the same.

The technical problems that the present disclosure seeks to solve are not limited to the above-mentioned problems, and other problems not mentioned above will be clearly understood by those skilled in the art from the description of the invention described below.

### Technical Solution

In order to solve the above problem, a battery pack according to the present disclosure may include: a plurality of battery cells; an outer case configured to store the plurality of battery cells and including a plurality of unit parts disposed to extend in the width direction of the plurality of battery cells; and a reinforcement member configured to interconnect the plurality of unit parts and to be inserted into the unit part such that the surface thereof does not contact the battery cell.

In addition, preferably, each of the unit parts may include: a bottom plate on which the battery cell is seated; and a pair of protruding blocks provided on both sides of the bottom plate so as to protrude from the plate surface, and the reinforcement member may be disposed to pass through the pair of protruding blocks.

In addition, preferably, the bottom plate and the pair of protruding blocks may be injection-molded as one piece.

In addition, preferably, the reinforcement member may be configured as a pair of unit steel pipes.

In addition, preferably, the battery pack may further include a fastening portion configured to fasten one of the unit parts to another neighboring unit part.

In addition, preferably, the fastening portion may be provided to be exposed to the bottom surface of the bottom plate.

In addition, preferably, the fastening portion may include: at least one fastening protrusion provided on one side of one unit part in the width direction; and at least one fastening depression provided adjacent to the fastening protrusion.

In addition, preferably, the fastening depression of one unit part may be disposed at a position corresponding to the fastening protrusion provided in another neighboring unit part.

In addition, preferably, the fastening portion may further include a fastening member configured to fasten the fastening protrusion and the fastening depression to each other.

In addition, preferably, a plurality of fastening protrusions and a plurality of fastening depressions may be provided, and the fastening protrusions and the fastening depressions may be disposed alternately in each unit part.

In addition, preferably, the reinforcement member may have an outer surface covered with an insulating coating.

In addition, preferably, the unit part may be made of a plastic material, and the reinforcement member may be made of a metal material.

In addition, according to the present disclosure, there may be provided a vehicle including the battery pack described above.

In addition, according to the present disclosure, there may be provided an energy storage system including the battery pack described above.

### Advantageous Effects

According to one aspect of the present disclosure, since the outer case is manufactured by plastic injection molding, it is possible to secure insulation with the battery cell, and since the outer case is divided into unit parts interconnected with unit steel pipes, it is possible to improve the mechanical properties of the outer case, thereby ensuring structural stability.

In particular, according to one aspect of the present disclosure, since electric insulation is attained without additional insulation structures or separate insulation components, it is possible to reduce manufacturing steps, tact time, and production cost of the battery pack.

In addition, according to one aspect of the present disclosure, a rigid fastening configuration is obtained through the fastening portion between a unit part and an adjacent unit part, thereby improving resistance to bending or sagging.

The effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is a longitudinal cross-sectional view of FIG. 1.
FIG. 3 is a diagram explaining the assembly configuration of respective unit parts of a battery pack according to an embodiment of the present disclosure.
FIGS. 4 and 5 are a perspective view and a bottom perspective view of a unit part that is a part of an outer case in a battery pack according to an embodiment of the present disclosure.
FIG. 6 is a diagram illustrating the combined state of respective unit parts in a battery pack according to an embodiment of the present disclosure.
FIG. 7 is a longitudinal cross-sectional view of a fastening portion between respective unit parts in a battery pack according to an embodiment of the present disclosure.
FIG. 8 is a bottom view illustrating the state in which respective unit parts of a battery pack are coupled according to an embodiment of the present disclosure.
FIG. 9 is a diagram illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

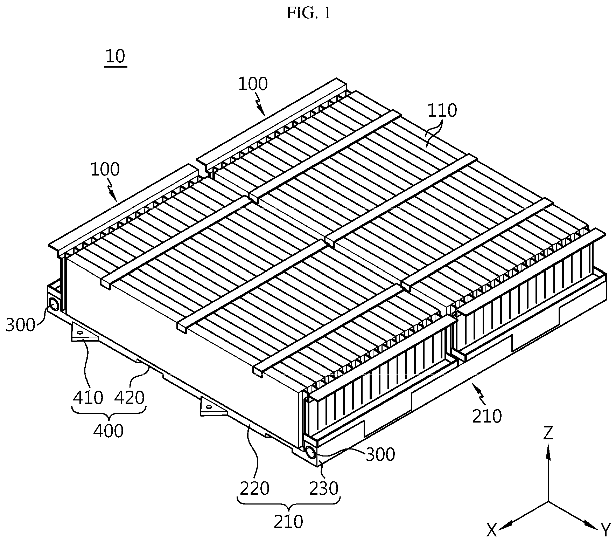

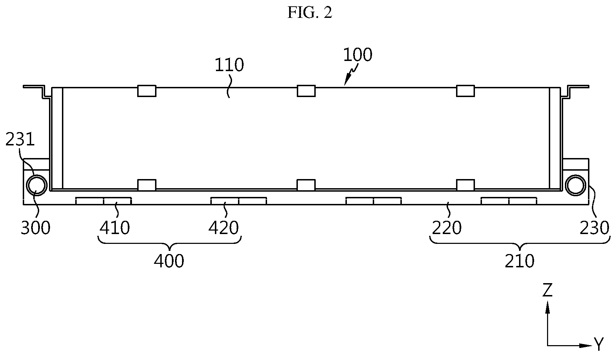

FIG. 1 is a perspective view of a battery pack according to an embodiment of the present disclosure, and FIG. 2 is a longitudinal cross-sectional view of FIG. 1.

Referring to FIGS. 1 and 2, a battery pack 10 may include a plurality of battery cells 110, an outer case 200 accommodating the plurality of battery cells 110, and a reinforcement member 300.

The plurality of battery cells 110 are secondary batteries and may be configured as pouch-type secondary batteries, prismatic secondary batteries, or cylindrical secondary batteries. For example, a plurality of pouch-type batteries may be arranged side by side in the horizontal direction (the ±X-axis direction, hereinafter referred to as a width direction) while standing upright in the vertical direction (the ±Z-axis direction). Hereinafter, the present embodiment will be described on the assumption that the plurality of battery cells 110 are configured as pouch-type secondary batteries.

A predetermined number of battery cells 110 may be collected to form one cell assembly 100. In addition, the battery pack 10 may be configured as a plurality of cell assemblies 100. Here, the cell assembly indicates a plurality of battery cells 110 grouped. Alternatively, the plurality of battery cells 110 may be provided directly inside the outer case 200 in the form of a group of battery cells 110, without being separately grouped to the cell assembly 100.

The outer case 200 may store a plurality of battery cells 110. Although not shown in the drawing, the outer case 200 may be a configuration to support the battery cells 110 at the bottom of the pack case, and although not shown in the drawing, configurations such as a pack cover to cover the battery cells 110 at the top, a tray, and a rack may be further provided. If the pack cover is coupled to the outer case 200, an empty space in which the battery cell 110 is accommodated may be formed, and the cell assembly 100 may be stored in the empty space. Hereinafter, for convenience of explanation, the configuration of the outer case 200 will be mainly described, excluding other configurations of the pack case.

The outer case 200 may support the at least one cell assembly 100 or a plurality of battery cells 110. The outer case 200 may be mounted to a machine or equipment that uses the battery pack 10 as an energy source. For example, the outer case 200 may be mounted to an energy storage system, an electric vehicle, or the like

The outer case 200 may be made of a plastic material. The outer case 200 may be entirely made of a plastic material. In particular, the outer case 200 may be configured in plastic injection molding. As described above, if the outer case 200 is manufactured by plastic injection molding, insulation with the battery cell 110 may be secured.

However, when applying plastic injection molding, there may be a problem with the structural safety of the outer case 200. Moreover, as the size of the outer case 200 increases, the structure of the outer case 200 made by plastic injection molding may be more prone to bending or sagging and may have lower strength or rigidity, compared to the outer case 200 made of steel, thereby failing to provide firm support.

Accordingly, in the present embodiment, the outer case 200 may have a reinforcement member 300 provided therein. The reinforcement member 300 may be inserted into the outer case 200. A pair of reinforcement members 300 may be disposed to be inserted into the protruding structures on both sides of the outer case 200. In particular, the reinforcement member 300 may be configured in the form of a rod extending long in one direction so as to be inserted into the outer case 200. For example, a steel pipe may be configured in the form of a circular rod, as shown in the drawing. This reinforcement member 300 may improve the mechanical properties of the outer case.

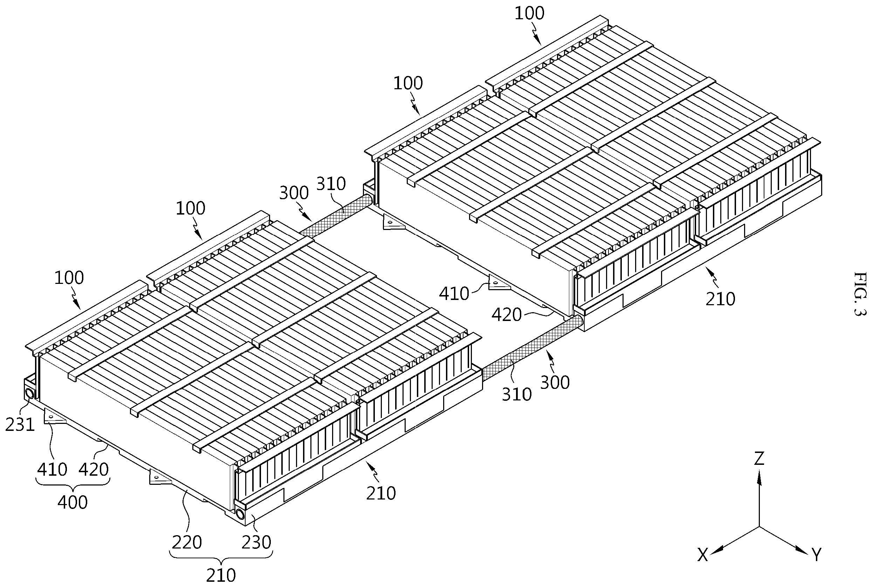

FIG. 3 is a diagram explaining the assembly configuration of respective unit parts of a battery pack according to an embodiment of the present disclosure.

Referring to FIG. 3, the outer case 200 may be configured by coupling a plurality of unit parts 210, which are separate units, instead of a single structure. The outer case 200 may include a plurality of unit parts 210 disposed to extend in the width direction (±X-axis direction) of the plurality of battery cells 110. In this embodiment, the outer case 200 may include two unit parts 210 separated in the forward and backward directions. Each unit part 210 may have a predetermined width in the width direction of the battery cell 110 and, in this embodiment, have a width capable of accommodating two cell assemblies 100.

In addition, the reinforcement members 300 may be configured to interconnect the plurality of unit parts 210. A pair of the reinforcement members 300 may be disposed to be respectively inserted into the protruding structures on both sides of the unit part 210 and to be continuously inserted into another adjacent unit part 210 disposed in the width direction of the unit part 210, thereby connecting the plurality of unit parts 210 to each other. The reinforcement members may be configured as a pair of unit steel pipes. The reinforcement member 300 may have an insulating coating 310 provided on the outer surface thereof.

According to the battery pack 10 having the above configuration, since the outer case 200 is made of a plastic material, the electric insulation of the battery pack 10 may be secured. In addition, the insulating coating 310 on the outer surface of the reinforcement member 300 may further improve insulation. In addition, since the steel pipes for mechanical structure are applied to the plastic outer case 200, it is possible to secure the structural stability of the outer case 200. In particular, in the case where the outer case 200 of the battery pack 10 is provided in a large size, the above-mentioned configuration also enables such a large outer case 200 to be reinforced in its structural safety, which will be described later.

Hereinafter, each of the unit parts 210 will be described in detail.

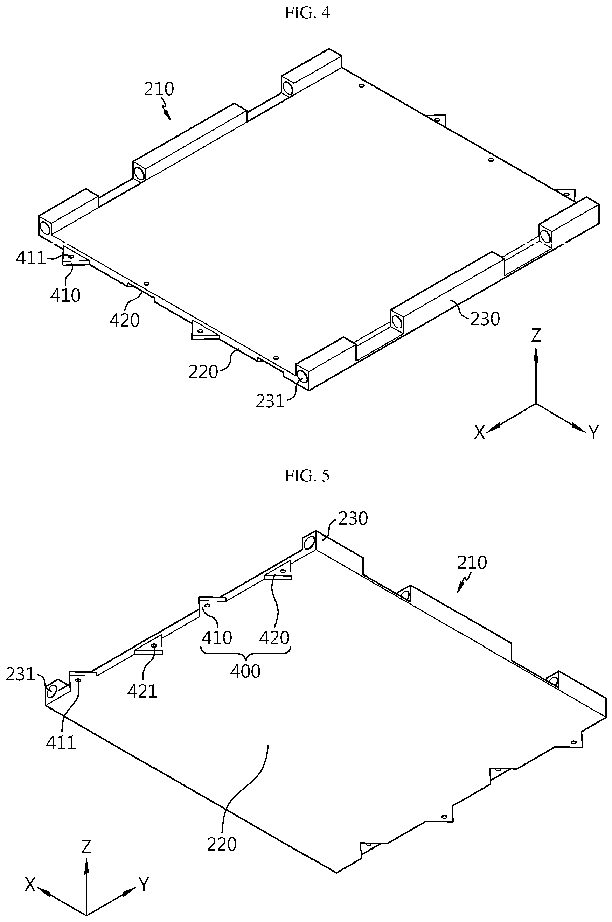

FIGS. 4 and 5 are a perspective view and a bottom perspective view of a unit part that is a part of an outer case in a battery pack according to an embodiment of the present disclosure.

Referring to FIGS. 4 and 5 and FIGS. 2 and 3, the unit part 210 may include a bottom plate 220 and a pair of protruding blocks 230 provided on both sides of the bottom plate 220.

The unit part 210 may include the bottom plate 220. The bottom plate 220 may be configured in a plate shape and may be located below the battery cell 110. Accordingly, the battery cell 110 may be seated on the upper surface of the bottom plate 220. The bottom plate 220 may be configured as a plate and may come into contact with and support one side surface of the battery cells 110 stacked in the width direction while standing vertically. As described above, since the side surface of the battery cell 110 is supported by contact, the insulation structure of the outer case 200, especially the bottom plate 220, may be important.

The protruding blocks 230 may be provided on both sides of the bottom plate 220 so as to protrude upward from the surface of the bottom plate 220. Accordingly, the battery cell 110 may be stably mounted and stored. An insertion hole 231 into which the reinforcement member 300 is inserted may be formed in the protruding block 230. The insertion holes 231 of the unit part 210 and the neighboring unit part 210 may be disposed to communicate with each other, and the reinforcement member 300 may be inserted into the insertion hole 231.

The unit parts 210 having the above configuration may provide a space in which the cell assembly 100 and a plurality of battery cells 110 are stored. That is, a plurality of battery cells 110 may be seated and supported on the unit part 210 and may be accommodated in the inner space of the respective unit parts 210 of the outer case 200.

As described above, the outer case 200 may be made of a plastic material, and specifically, the unit part 210 configured as the bottom plate 220 and the protruding blocks 230 may be made of a plastic material. In particular, the bottom plate 220 and the pair of protruding blocks 230 may be injection-molded as one piece. As described above, by manufacturing each unit part 210 in plastic injection molding, it is possible to secure convenience in processing, as well as insulation with the battery cell 110, and reduce manufacturing steps. Likewise, manufacturing the outer case 200 by plastic injection molding makes it possible to obtain electric insulation without additional insulating structures or separate insulating components, thereby reducing the tact time and production cost of the battery pack 10.

In addition, the outer case 200 may be comprised of a plurality of unit parts 210 coupled to each other, so that a predetermined load of the battery cell 110 may be supported by the separated unit parts 210 of the outer case, thereby securing structural stability. In addition, the unit parts 210 may be connected to each other by unit steel pipes, thereby improving mechanical properties of the outer case 200 and ensuring structural stability.

The unit part 210 may include a fastening portion 400. The fastening portion 400 may fasten one unit part 210 and another neighboring unit part 210 to each other. The configuration in which one unit part 210 is fastened and firmly fixed to the neighboring unit part 210 will be described later.

Hereinafter, the reinforcement member 300 and the fastening portion 400, which improve the structural stability of the outer case 200, will be described in detail.

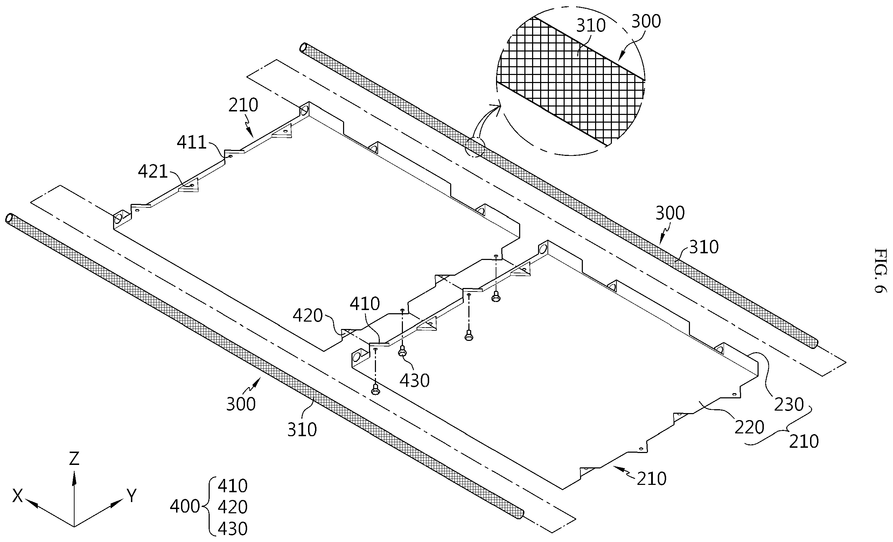

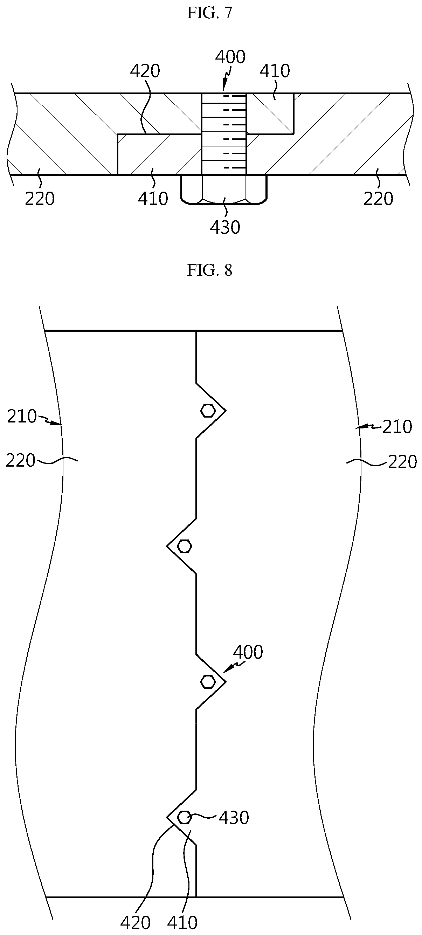

FIG. 6 is a diagram illustrating the combined state of respective unit parts in a battery pack according to an embodiment of the present disclosure, FIG. 7 is a longitudinal cross-sectional view of a fastening portion between respective unit parts in a battery pack according to an embodiment of the present disclosure, and FIG. 8 is a bottom view illustrating the state in which respective unit parts of a battery pack are coupled according to an embodiment of the present disclosure.

The battery pack 10 according to the present embodiment may provide configuration of connecting the respective unit parts 210 to each other. In this embodiment, a reinforcement member 300 and a fastening portion 400 may be provided.

Referring to FIGS. 6 to 8, the battery pack 10 may include a reinforcement member 300 that interconnects a plurality of unit parts 210. The reinforcement member 300 may be configured to interconnect the plurality of unit parts 210 and to be inserted into the unit part 210 so that its surface does not contact the battery cell 110.

Specifically, the reinforcement member 300 may be disposed to pass through the pair of protruding blocks 230. The reinforcement member 300 may be configured as a pair of unit steel pipes. The reinforcement member 300 may be steel pipes for mechanical structure. Through this, both sides of each unit part 210 may be firmly supported. As described above, although the outer cases 200 are manufactured by plastic injection molding, they are interconnected by the unit steel pipes to improve mechanical properties of the outer case 200 and secure structural stability thereof. In addition, the outer surface of the reinforcement member 300 may be covered with an insulating coating 310, thereby further improving the insulation.

Although the respective unit parts 210 are interconnected through the reinforcement member 300 to ensure the mechanical properties of each unit part 210, the movement of the reinforcement member 300 in longitudinal direction (the width direction of the battery cell or the ±X-axis direction) is unable to be restricted. Fine movements may be possible. Accordingly, a fastening portion 400 may be provided in this embodiment.

The fastening portion 400 may fasten one unit part 210 and another neighboring unit part 210 to each other. The fastening portion 400 may be provided to be exposed to the bottom surface of the bottom plate 220.

The fastening portion 400 may include at least one fastening protrusion 410 provided on one side of the unit part 210 in the width direction, at least one fastening depression 420 provided adjacent to the fastening protrusion 410, and a fastening member 430 that fastens the fastening protrusion 410 and the fastening depression 420 to each other.

The fastening depression 420 of one unit part 210 may be disposed at a position corresponding to the fastening protrusion 410 provided in another neighboring unit part 210.

The fastening protrusion 410 may be provided to protrude in a triangular shape when viewed from above, and the fastening depression 420 may be formed to be depressed inward corresponding to the shape of the fastening protrusion 410.

A plurality of fastening protrusions 410 and a plurality of fastening depressions 420 may be provided, and the fastening protrusions 410 and the fastening depressions 420 may be disposed alternately in each unit part 210. Although two fastening protrusions 410 and two fastening depressions 420 are provided in the unit part 210 of the present embodiment, the number and positions thereof are not limited.

As described above, the fastening depression 420 of one unit part 210 may be firmly fixed to another neighboring unit part 210 through the fastening portion 400. Accordingly, the movement of the battery cell 110 in the width direction may be restricted. In addition, as shown in FIG. 7, the fastening protrusion 410 and the fastening depression 420 may be provided in a double-layered structure in the connection portion where the fastening portion 400 is disposed between the bottom plates 220, thereby improving the structure rigidity and resistance to bending or sagging in the thickness direction (the ±Z-axis direction).

According to this implemented configuration, since the outer case 200 is divided into unit parts 210 to be interconnected with unit steel pipes, it is possible to improve the mechanical properties of the outer case 200, thereby ensuring structural stability.

An energy storage system according to the present disclosure may include one or more battery packs 10 according to the present disclosure. In particular, in order to provide a large energy capacity, the energy storage system may include a plurality of battery packs 10 electrically connected to each other according to the present disclosure. In addition, the energy storage system according to the present disclosure may further include various other elements of the energy storage system known at the time of filing the present disclosure. Moreover, this energy storage system may be used in various places or devices, such as smart grid systems or electric charging stations.

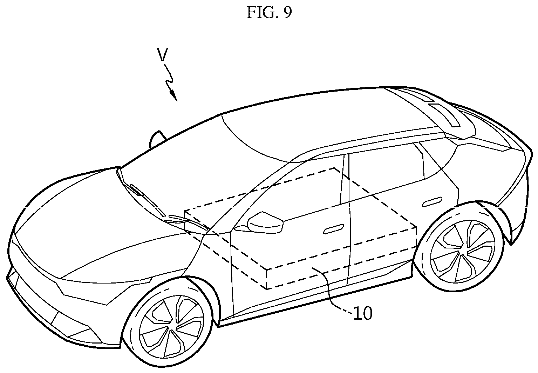

FIG. 9 is a diagram illustrating a vehicle according to an embodiment of the present disclosure.

Referring to FIG. 9, the vehicle according to the present disclosure may include one or more battery packs 10 according to the present disclosure. As an example, the vehicle V according to an embodiment of the present disclosure may be configured to include at least one of the battery packs 10 described above.

In addition, the vehicle V according to an embodiment of the present disclosure may further include various other elements included in the vehicle in addition to the battery pack 10. For example, the vehicle V according to an embodiment of the present disclosure may further include, in addition to the battery pack 10 according to an embodiment of the present disclosure, a car body, a motor, control devices such as ECU (electronic control unit), or the like.

According to various embodiments described above, there may be provided a battery pack 10 in which the outer case is manufactured by plastic injection molding, thereby securing insulation with the battery cell, and in which the outer case is divided into unit parts to be interconnected through unit steel pipes to improve the mechanical properties of the outer case, thereby ensuring structural stability, and a vehicle V including the same.

Although terms indicating directions such as upward, downward, left, right, forward, and backward are used in this specification, it is obvious to those skilled in the art that these terms are only for convenience of explanation and may vary depending on the location of the target object or the location of the observer.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Although the description of the present disclosure and the accompanying drawings to illustrate the embodiments thereof may be somewhat exaggerated in order to emphasize or highlight the technical concept of the present disclosure, it will be obvious to those skilled in the art that various types of modifications are possible in consideration of the content previously described and shown in the drawings.

## Claims

1. A battery pack comprising:
a plurality of battery cells;
an outer case configured to store the plurality of battery cells and comprising a plurality of unit parts disposed to extend in the width direction of the plurality of battery cells; and
a reinforcement member configured to interconnect the plurality of unit parts and to be inserted into the unit part such that the surface thereof does not contact the battery cell.

2. The battery pack according to claim 1,
wherein each of the unit parts comprises:
a bottom plate on which the battery cell is seated; and
a pair of protruding blocks provided on both sides of the bottom plate so as to protrude from the plate surface, and
wherein the reinforcement member is disposed to pass through the pair of protruding blocks.

3. The battery pack according to claim 2,
wherein the bottom plate and the pair of protruding blocks are injection-molded as one piece.

4. The battery pack according to claim 2,
wherein the reinforcement member is configured as a pair of unit steel pipes.

5. The battery pack according to claim 2,
further comprising a fastening portion configured to fasten one of the unit parts to another neighboring unit part.

6. The battery pack according to claim 5,
wherein the fastening portion is provided to be exposed to the bottom surface of the bottom plate.

7. The battery pack according to claim 5,
wherein the fastening portion comprises:
at least one fastening protrusion provided on one side of one unit part in the width direction; and
at least one fastening depression provided adjacent to the fastening protrusion.

8. The battery pack according to claim 7,
wherein the fastening depression of one unit part is disposed at a position corresponding to the fastening protrusion provided in another neighboring unit part.

9. The battery pack according to claim 7,
wherein the fastening portion further comprises a fastening member configured to fasten the fastening protrusion and the fastening depression to each other.

10. The battery pack according to claim 7,
wherein a plurality of fastening protrusions and a plurality of fastening depressions are provided, and
wherein the fastening protrusions and the fastening depressions are disposed alternately in each unit part.

11. The battery pack according to claim 1,
wherein the reinforcement member has an outer surface covered with an insulating coating.

12. The battery pack according to claim 1,
wherein the unit part is made of a plastic material, and
wherein the reinforcement member is made of a metal material.

13. A vehicle comprising at least one battery pack according to any one of claims 1 to 12.

14. An energy storage system comprising at least one battery pack according to any one of claims 1 to 12.
